# EUROPÄISCHE PATENTSCHRIFT

(11) **EP 1 758 493 B1**
(45) Veröffentlichungstag und Bekanntmachung des Hinweises auf die Patenterteilung: **23.12.2009**
(21) Anmeldenummer: 05749318.1
(22) Anmeldetag: 06.06.2005
(51) Int. Cl.: A47L 9/00, B60B 19/12

(54) **VORRICHTUNG WIE INSBESONDERE EIN VERFAHRBARER STAUBSAUGER SOWIE LAUFROLLE FÜR EINE SOLCHE VORRICHTUNG**
DEVICE, SUCH AS A DISPLACEABLE VACUUM CLEANER IN PARTICULAR AND ROLLER FOR SAID DEVICE
DISPOSITIF, EN PARTICULIER ASPIRATEUR MOBILE, ET ROULETTE POUR UN DISPOSITIF DE CE TYPE

(30) Priorität: 19.06.2004 DE 102004029832
(43) Veröffentlichungstag der Anmeldung: 07.03.2007
(73) Patentinhaber: Vorwerk & Co. Interholding GmbH, 42275 Wuppertal (DE)
(72) Erfinder: KECK, Ullrich, 71332 Waiblingen (DE); CORNELISSEN, Markus, 42781 Haan (DE); SOMMER, Jörg, 50737 Köln (DE); WESSELS, Timm, 52064 Aachen (DE)
(74) Vertreter: Müller, Enno
(86) Internationale Anmeldenummer: PCT/EP2005/052579
(87) Internationale Veröffentlichungsnummer: WO 2005/122857

(56) Entgegenhaltungen:
- EP-A- 0 716 938
- BE-A- 484 248
- US-A- 3 608 236
- US-A- 3 861 435
- US-A- 4 353 428
- US-A- 4 785 899
- US-A- 5 024 312
- US-A1- 2002 185 907

## Beschreibung

Die Erfindung betrifft eine Vorrichtung wie insbesondere einen verfahrbaren Staubsauger oder eine verfahrbare Bodendüse für einen Staubsauger mit einer vorzugsweise aus Kunststoffmaterial bestehenden Laufrolle mit einer geometrischen Drehachse.

Bei Staubsaugern, insbesondere bei Haushalts-Bodenstaubsaugern ist es bekannt, die Geräte mit Laufrollen zu versehen. Diesbezüglich ist es weiter bekannt, zur Verbesserung der Geradeauslaufeigenschaften neben einer gegebenenfalls vorgesehenen Lenkrolle weitere Laufrollen in Form einer Bockrolle, das heißt nicht lenkbar, auszubilden. Bei sogenannten Bodendüsen als Vorsatzgeräte für den Staubsauger sind gleichfalls bockrollenartige Laufrollen bekannt. Bei diesen Bodendüsen erfolgt in der Regel eine Abstützung auf dem zu pflegenden Boden einerseits im Bereich des Saugmundes und andererseits, bevorzugt im Anschlussbereich eines Staubsaugerstieles oder dergleichen durch die dort bodenseitig angeordneten Laufrollen. Bei Lenkbewegungen bzw. Bewegungen der Vorrichtung abweichend zur festgelegten Laufrichtung erfolgt eine schlupfbehaftete Bewegung über den zu pflegenden Boden.

Weiter sind Laufrollen für vorbeschriebene Vorrichtungen bekannt, welche mit einer Weich-Elastomer-Komponente auf der Lauffläche versehen sind. Die so ausgestatteten Laufflächen dämpfen die Schallentstehung beim Abrollen über Unebenheiten. Unter der Weichkomponente befindet sich in der Regel ein härterer Kunststoffkem, der die Festigkeit der Laufrolle gewährleistet. Bei Querbewegungen mit Schlupf führt eine Weichkomponente auf der Lauffläche zu Streifenbildung auf Hartböden. Insofern erweisen sich weiche Laufflächen als nachteilig. Darüber hinaus sind relativ große Kräfte durch den gegebenen hohen Gleitreibungskoeffizienten zur Lenkbewegung aufzubringen. Hingegen sind weiche Laufflächen für die Schallminimierung von Vorteil. Harte Laufflächen verursachen störenden Körperschall. Bei Gleitbewegungen jedoch zeigen sie sich dahingehend als vorteilhaft, da diese nicht zu einer Streifenbildung auf dem zu pflegenden Boden neigen. Der Gleitreibungskoeffizient ist bei solchen harten Laufflächen wesentlich kleiner als bei weichen Laufflächen.

Aus der US 2002/185907 A1 sind Rollen bekannt, wie sie an einem Vorsatzgerät eines Staubsaugers angebracht sein können. Die Nabe der Rollen ist mittig von einem Kugelkopf durchsetzt, der sowohl ein übliches Rollen wie auch ein Verkippen der Rolle ermöglicht. Die Kippachse verläuft in derselben Ebene wie die Drehachse. Beim Kippen um einen bestimmten Winkel bewegt sich am Außendurchmesser oben wie unten die Rollenlauffläche um denselben absoluten Betrag. Eine insofern geometrisch gleiche Ausbildung einer Laufrolle, in diesem Fall an einem Spielzeugauto, ist aus der US 3,608,236 A1 bekannt. Die US 4,785,899 A1 zeigt eine als Halbschale ausgebildete Rolle, wobei die Halbschale verschwenkbar ist. Es ergeben sich auch hier absolut gleiche Bewegungen nach oben wie nach unten. Die EP 0716938 A1 beschreibt eine mögliche Verbesserung der Laufeigenschaften eines Staubsaugervorsatzgerätes, indem die Laufflächen der Laufrollen aus weichem Material bestehen, zugleich aber auch aus einem Material, das einen geringen Reibungskoeffizienten aufweist.

Der Erfindung liegt die Aufgabe zugrunde, eine Vorrichtung mit einer kippbaren Laufrolle anzugeben, bei welcher die Kippbarkeit gleichwohl günstige Laufeigenschaften ermöglicht.

Die Aufgabe ist beim Gegenstand des Anspruches 1 gelöst, wobei darauf abgestellt ist, dass die Kippachse bezogen auf eine Benutzungsstellung der Vorrichtung gegenüber der geometrischen Drehachse nach unten versetzt ausgebildet ist. Zufolge dieser Ausgestaltung ist eine Vorrichtung geschaffen, welche mit Laufrollen versehen ist, die insbesondere bei Querbewegungen, d.h. bei Bewegungen der Vorrichtung unter einem Winkel zur üblichen Laufrichtung der Laufrollen, verbesserte Schlupfeigenschaften aufweist. Bei einer Kippverlagerung wird auf der ansonsten als Bockrolle ausgebildeten Laufrolle auf eine zu der üblichen Lauffläche benachbarte Lauffläche gewechselt, welche weiter eine geringe Aufstandsfläche aufweisen kann, so beispielsweise durch übliche Verrundung der Rollen-Randkante. Dadurch, dass die Kippachse bezogen auf eine Benutzungsstellung der Vorrichtung gegenüber der geometrischen Drehachse nach unten versetzt ausgebildet ist, ergibt sich unten, d.h. im Aufsetzbereich der Laufrolle, bei einer Verkippung nur ein geringer Kippweg.

Weiter ist vorgeschlagen, dass die Kippachse in einer physikalischen Achse verwirklicht ist, die einerseits mit einem Nabenteil und andererseits mit einem Chassis der Vorrichtung verbunden ist. Das Nabenteil stellt hierbei die geometrische Drehachse der Laufrolle. Alternativ kann die physikalische Achse zur Verwirklichung der Kippachse auch über ein Zwischenelement oder dergleichen mit einer physikalischen Laufrollen-Drehachse verbunden sein. Auf der Lauffläche sind in Querrichtung Bereiche mit unterschiedlichen Gleiteigenschaften ausgebildet, wobei bei verkippter Laufrolle ein Bereich anderer Gleiteigenschaft als bei unverkippter Laufrolle auf dem Boden aufliegt. Zufolge dieser Ausgestaltung ist bei verkippter Laufrolle infolge einer Querbewegung der Vorrichtung ein verringerter Gleitreibungskoeffizient vorhanden, zufolge dessen ein verbesserter Schlupf erreicht ist. Die unterschiedlichen Gleiteigenschaften sind insbesondere dadurch erreicht, dass die Lauffläche in einem über ihre Breite gesehenen mittleren Bereich mit einem Gummimaterial oder thermoplastischen Elastomer versehen ist, wobei weiter die Lauffläche in einem seitlichen Bereich aus einem Hartkunststoff besteht. Dieser Hartkunststoff hinterlässt bei Querbewegung und damit verbundenem Schlupf über den Boden keine Streifen bzw. Abrieb. Bei Geradeauslauf der Vorrichtung kommt der mittlere Bereich zur Wirkung. Durch das vorgesehene Gummimaterial in diesem mittleren Bereich ist eine Schallminimierung erreicht, welche sich insbesondere bei Überfahren von Bodenunebenheiten, wie beispielsweise Fugen als vorteilhaft erweist. In einer bevorzugten Ausgestaltung ist vorgesehen, dass zwei gegenüberliegend auf derselben geometrischen Achse angeordnete Laufrollen über eine Spurstange miteinander verbunden sind. Zufolge dieser Ausgestaltung ist gewährleistet, dass zwei auf derselben geometrischen Achse angeordnete Laufrollen bei einer Querbewegung der Vorrichtung gleichzeitig um einen gleichen Winkelbetrag kippen. Hierdurch ist das Fahrverhalten der Vorrichtung in der normalen Anwendung, das heißt im Geradeauslauf, deutlich stabilisiert. Eine solche Ausgestaltung mit einer Spurstange ist insbesondere bei einer Anordnung bevorzugt, bei welcher die Kippachse bezogen auf die geometrische Drehachse jeder Laufrolle mittig angeordnet ist. Die Kippanlenkung ist bevorzugt so ausgebildet, dass sowohl ein negativer als auch ein positiver Kippwinkel eingenommen werden kann. Entsprechend kann die Laufrolle ausgehend von einer senkrecht ausgerichteten Geradeauslaufstellung aus dieser Senkrechten heraus zu beiden Seiten verkippen, um entsprechend Querbewegungen der Vorrichtung in Richtung der einen Seite oder in Richtung der anderen Seite nachzuvollziehen. Das Kippen der Laufrolle aus der Senkrechten zur einen Seite hin wird durch einen negativen Kippwinkel und zur anderen Seite hin durch einen positiven Kippwinkel definiert. Als besonders vorteilhaft erweist sich eine Ausgestaltung, bei welcher in einer Kipplage eine Feder wirksam ist, zur Rückverlagerung der Laufrolle in die unverkippte Lage. Hierdurch ist ein selbstständiges Rückstellen der Laufrolle in die übliche Geradeauslaufausrichtung erreicht, sobald die eine Verkippung der Laufrolle bewirkende Querkraft wegfällt. Die Rückstellfeder kann eine übliche mechanisch wirkende Feder, wie beispielsweise eine Zylinderfeder in Form einer Zug- oder Druckfeder, eine Blattfeder, eine Schenkelfeder oder dergleichen sein. Alternative Lösungen sehen eine Rückstellung durch hydraulische oder ähnliche Systeme vor. Weiter kann die Rückstellfeder auch durch ein komprimierbares und rückstellfähiges Schaumstoffmaterial gebildet sein. Die Kippgelenkverbindung besteht aus einer Kippachse, die einerseits von einem chassisseitigen Flansch und andererseits von einem laufrollenseitigen Flansch ergriffen ist. Die Kippachse ist hierbei bevorzugt fest mit einem der Flansche verbunden. In einer bevorzugten Ausgestaltung des Erfindungsgegenstandes ist vorgesehen, dass die Kippachse und die Drehachse sich nicht schneiden, so auch nicht in einer gedachten Verlängerung der eventuell vorhandenen physikalischen Achsen. Bevorzugt trifft diese Forderung in jeder Stellung der Laufrolle zu. Auch kann vorgesehen sein, dass die Laufrolle ein Nabenteil und ein Laufrad aufweist,
wobei das Nabenteil relativ zu dem Laufrad drehbar ist und wobei weiter die Laufrolle mittels des Nabenteils an der Vorrichtung befestigt ist. Entsprechend greift die Befestigung der Laufrolle unter Verzicht auf eine physikalische Drehachse außermittig an dem Nabenteil an. Diesbezüglich wird weiter bevorzugt, dass die Kippachse bezogen auf die geometrische Drehachse der Laufrolle außermittig angeordnet ist, zufolge dieser Ausgestaltung eine verbesserte Geradeauslaufeigenschaft der Laufrolle erreicht ist.

Nachfolgend ist die Erfindung anhand der beigefügten Zeichnung, welche lediglich Ausführungsbeispiele darstellt, näher erläutert. Es zeigt:
- Fig. 1: in perspektivischer Darstellung einen stielgeführten Hand-Staubsauger mit einer Vorrichtung in Form einer Bodendüse;
- Fig. 2: die Bodendüse in Unteransicht;
- Fig. 3: den schematischen Schnitt gemäß der Linie III - III in Fig. 2;
- Fig. 4: den Schnitt gemäß der Linie IV - IV in Fig. 3 bei senkrechter Ausrichtung der Laufrolle;

- Fig. 5: den Schnitt gemäß der Linie V - V in Fig. 4;
- Fig. 6: eine schematische Perspektivdarstellung der Laufrolle mit Blick auf die laufrolleninnenseitig ausgebildete Kippgelenkverbindung;
- Fig. 7: eine schematische Stirnansicht gegen die Laufrolle in der senkrechten Ausrichtung;
- Fig. 8: die Laufrolle gemäß Fig. 7, jedoch nach Einnehmen eines negativen Kippwinkels;
- Fig. 9: eine der Fig. 8 entsprechende Darstellung, jedoch bei Einnehmen eines positiven Kippwinkels;
- Fig. 10: eine der Fig. 4 entsprechende Schnittdarstellung, eine alternative Ausführungsform betreffend;
- Fig. 11: einen schematischen Querschnitt durch die Vorrichtung mit zwei auf derselben geometrischen Achse angeordneten Laufrollen;
- Fig. 12: eine der Fig. 11 entsprechende Darstellung, eine weitere alternative Ausführungsform betreffend.

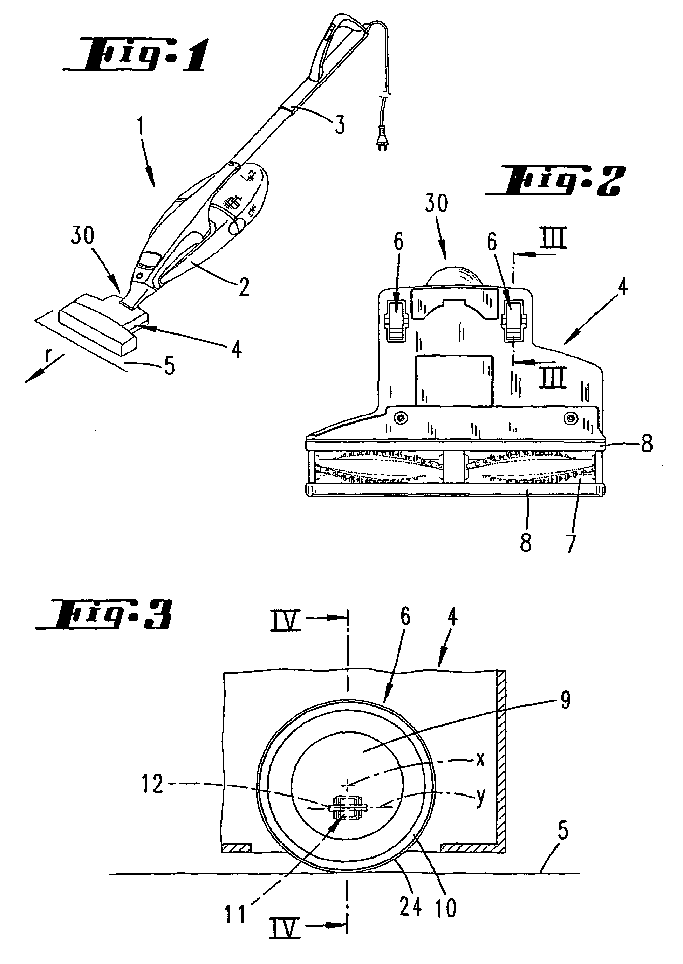

Dargestellt und beschrieben ist zunächst mit Bezug zu Figur 1 ein Staubsauger 1 in Form eines Handstaubsaugers, mit einem Staubsaugergehäuse 2, einem Führungsstiel 3 und einer sowohl strömungstechnisch als auch elektrisch mit dem Gehäuse 2 steckverbundenen Bodendüse 4, welche ein Ausführungsbeispiel einer Vorrichtung im Sinne der Erfindung darstellt.

Die Bodendüse 4 weist zur Abstützung auf dem zu pflegenden Boden 5 unterseitig zwei auf derselben geometrischen Achse x angeordnete Laufrollen 6 auf, wobei die Rollenachse x quer zur üblichen Verschieberichtung r der Bodendüse 4 angeordnet ist. Die beiden Laufrollen 6 sind zueinander beabstandet angeordnet und nahe den Seitenrandbereichen der Bodendüse 4 platziert. Weiter ist die Anordnung der Laufrollen 6 so gewählt, dass diese dem Anlenkungsbereich 30 des Staubsaugergehäuses 2 zugeordnet sind, demzufolge über den Führungsstiel 3 und das Gehäuse 2 auf die Bodendüse 4 einwirkende Schub-, Zug- oder auch Lenkkräfte auf die Laufrollen 6 einwirken.

Eine weitere Abstützung erfährt die Bodendüse 4 in dem den Laufrollen 6 abgewandten stirnseitigen Bereich durch einen Saugmund 7 begrenzende Gleitkufen 8 oder dergleichen.

Jede Laufrolle 6 weist ein Nabenteil 9 und ein Laufrad 10 auf, welches relativ zu dem Nabenteil 9 drehbar ist. Die Laufrolle 6 weist keine physikalische Drehachse auf. Vielmehr ist die Drehachse x geometrischer Natur.

Die Befestigung der Laufrolle 6 erfolgt außermittig am Nabenteil 9, konkret unterhalb der Rollenachse x der Kontaktfläche zum Pflegeboden 5 zugewandt. Die Befestigung ist durch eine Kippgelenkverbindung 11 realisiert.

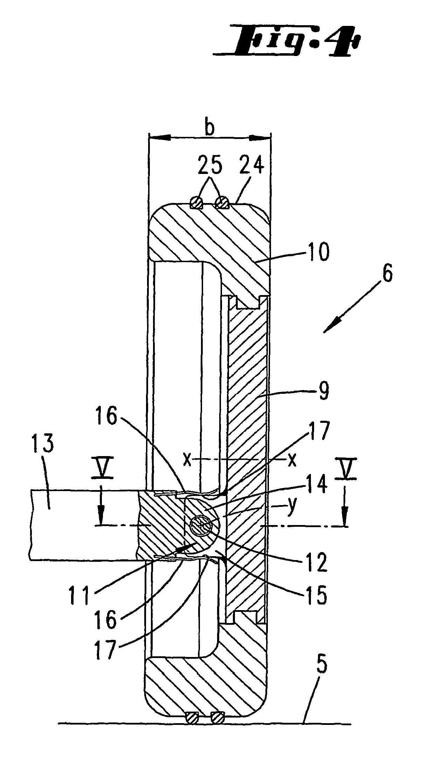

Diese Kippgelenkverbindung 11 weist eine physikalische Kippachse 12 mit einer geometrischen Achse y auf. Die Kippachse 12 ist hierbei in einem, an einem gehäuseseitigen bzw. chassisseitigen Ausleger 13 stirnseitig ausgeformten Flansch 14 festgelegt und ragt beidseitig dieses Flansches 14 über. Diese freien Achsenden treten in entsprechende Bohrungen zweier den Flansch 14 zwischen sich aufnehmender Flansche 15, welche innenwandig fest an dem Nabenteil 9 festgelegt sind. Wie insbesondere aus der Schnittdarstellung in Fig. 4 zu erkennen, verläuft die Kippachse y unterhalb der Rollenachse x und ist quer zu dieser ausgerichtet. Entsprechend sind die beiden Achsen x und y so ausgelegt, dass sich diese nicht schneiden.

Beide Achsen x und y erstrecken sich parallel zur Ebene des zu pflegenden Bodens 5, wobei die Rollenachse x quer zur üblichen Verschieberichtung r und die Kippachse y entsprechend in Verschieberichtung r weisend sich erstrecken.

Weiter ist die Anordnung so gewählt, dass in einer Projektion in Richtung auf den Pflegeboden 5 die beiden Achsen x und y einen rechten Winkel einschließen, wobei weiter die Kippachse y etwa mittig der Laufrolle 6 - in Breitenrichtung betrachtet - verläuft.

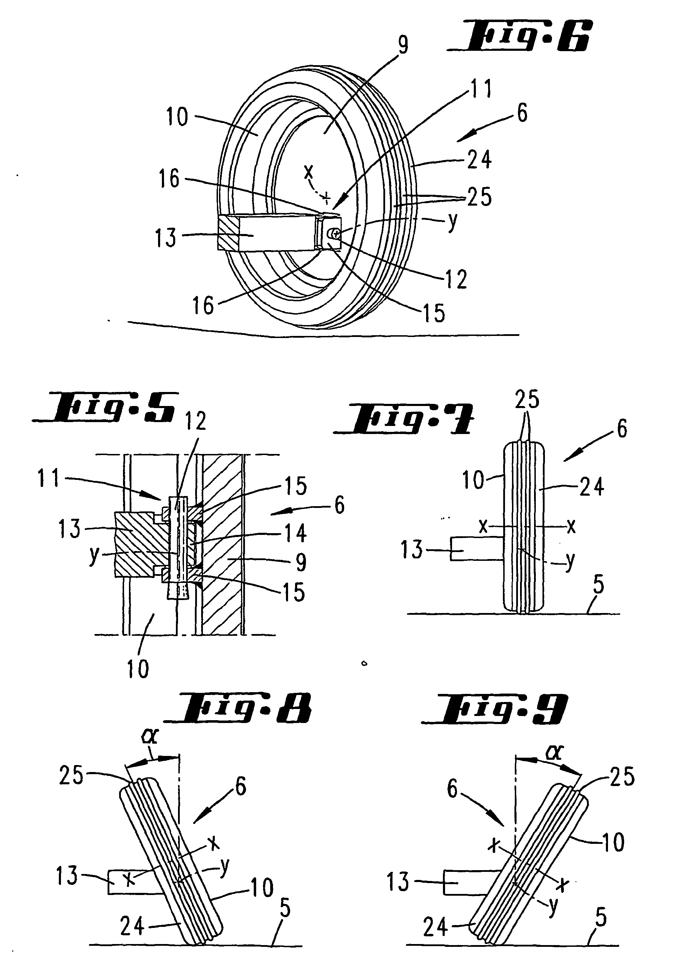

Die Laufrolle 6 ist zufolge dieser Ausgestaltung um die Achse y kippbar, dies sowohl aus der in Figur 7 schematisch dargestellten üblichen senkrecht ausgerichteten Fahrstellung in eine Kippstellung in Richtung auf die chassisseitige Festlegung gemäß der Darstellung in Figur 8 als auch in die entgegengesetzte Kippstellung von der Chassisanbindung weg weisend gemäß der Darstellung in Figur 9. Entsprechend ist die Kippgelenkverbindung 11 so gewählt, dass sowohl ein negativer als auch ein positiver Kippwinkel α zur Senkrechten eingenommen werden kann. In den Darstellungen entspricht der Kippwinkel α etwa jeweils 30°.

Die Kippgelenkverbindung 11 ist federnd ausgeführt. Hierzu sind an dem Ausleger 13 festgelegte Blattfedern 16 vorgesehen, welche auf um die Kippachse y schwenkbare Schmalrandkanten 17 der nabenteilseitigen Flansche 15 von außen nach radial innen einwirken. Mittels dieser federbaren Anordnung ist eine definierte Ausgangsausrichtung der Laufrolle 6 erreicht, welche der in Figur 4 dargestellten senkrechten, üblichen Verschiebeausrichtung entspricht. Aus dieser federunterstützten Ausgangslage heraus ist die Laufrolle 6 durch quer zur üblichen Verfahrrichtung r über das Staubsaugergehäuse 2 einwirkende Kräfte kippbar. Die Federn 16 verfügen hierbei über eine Kennlinie, die den Übergang zwischen den beiden Endpositionen - senkrechte Ausrichtung und gekipppte Ausrichtung - ohne großen Kraftaufwand erlaubt, wobei das Verlassen einer der beiden Endpositionen durch die gewählte Kennlinie wiederum erschwert ist. Demzufolge ist nur eine willensbetonte Änderung der Laufrollenausrichtung erreichbar.

Das Zurückbewegen in die Ausgangsstellung ist neben der Anordnung der Federn 16 noch durch die außermittige Anordnung der Kippgelenkverbindung 11 unterstützt.

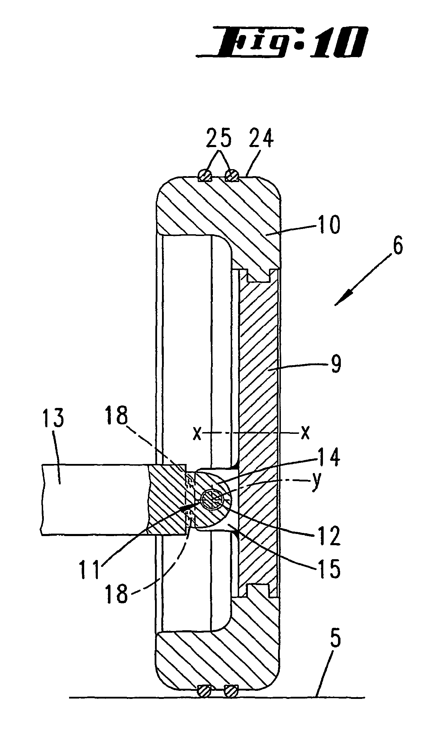

Alternativ zu der Anordnung von Blattfedern 16 können auch zwischen der dem Nabenteil 9 zugewandten Stirnfläche des chassisseitigen Auslegers 13 und den dieser Stirnfläche zugewandten Schmalrandkanten 17 der nabenteilseitigen Flansche 15 beidseitig der Kippachse 12 auf die Laufrolle 6 einwirkende Druckfedern 18 gespannt sein, die die Laufrolle 6 stets in die Ausgangsstellung, nämlich in die senkrechte Ausrichtung drängen (vgl. Fig. 10).

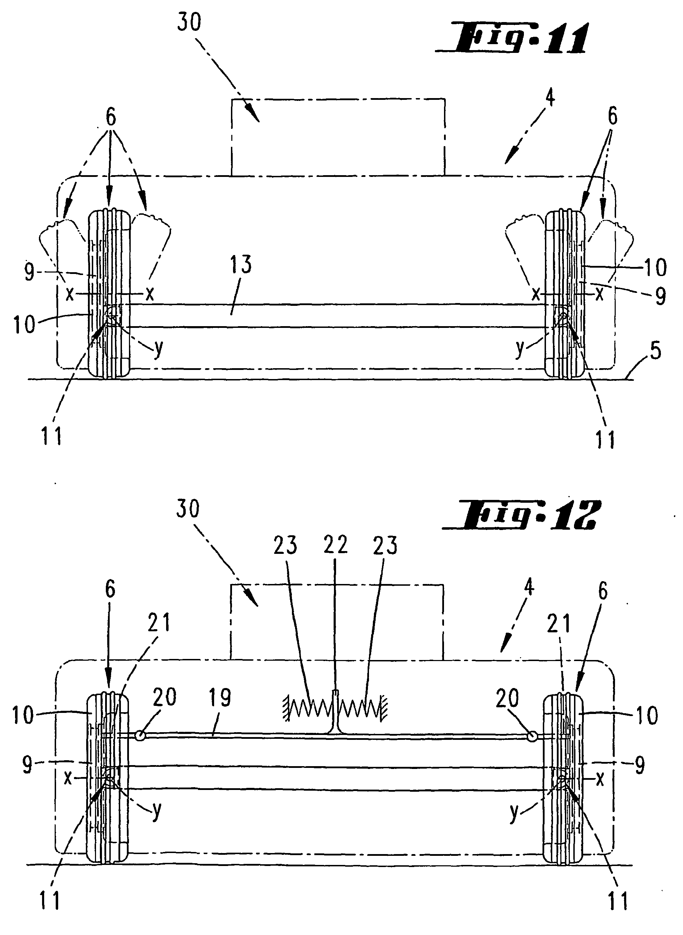

Auch können, wie schematisch in der Darstellung in Figur 12 gezeigt, Kippachse y und Rollenachse x in einer Ebene verlaufen. Dementsprechend ist die Kippgelenkverbindung 11 mittig des Nabenteils 9 ausgeformt. Weiter sind diese beiden auf derselben geometrischen Achse x angeordneten Laufrollen 6 über eine Spurstange 19 miteinander verbunden. Diese ist beiderends über jeweils ein Gelenk 20 mit einem nabenteilseitigen Arm 21 verbunden. Über die Spurstange 19 ist die gleichzeitige Kippverlagerung beider Laufrollen 6 bei Einleiten einer Querkraft in die Bodendüse 4 gewährleistet.

Weiter kann bei dieser Ausgestaltung mit Spurstange 19 eine Federrückstellung des Systems im Gehäuse der Bodendüse 4, beispielsweise mittig der Spurstange 19 erfolgen, so, wie schematisch in Figur 12 dargestellt durch beidseitig auf einen Radialausleger 22 der Spurstange 19 einwirkende Druckfedern 23, welche sich andernends chassisseitig abstützen.

Wie weiter insbesondere aus der Schnittdarstellung in Figur 4 zu erkennen, ist die Lauffläche 24 der Laufrolle 6 bzw. des Laufrades 10 in Querrichtung, das heißt in Breitenrichtung in Bereiche mit unterschiedlichen Gleiteigenschaften ausgebildet. So ist die Lauffläche 24 in einem über die Breite b gesehenen mittleren Bereich mit einem weichen, stoßabsorbierenden und schalldämpfenden Material versehen. Entsprechend der dargestellten Ausführung können hierzu umlaufende Elastomer-O-Ringe 25 in entsprechend umlaufende Nuten 26 eingelegt sein. Die Elastomer-Ringe ragen über die umgebende Lauffläche 24 radial hinaus, sind demnach in einer exponierten Lage.

Das Laufrad 10 ist im übrigen aus einem, einen geringen Reibkoeffizienten aufweisenden Hartkunststoff geformt.

In der unverkippten Stellung bei Verlagerung der Bodendüse 4 in bzw. entgegen der üblichen Verschieberichtung r erfolgt ein Abrollen der Laufrolle 6 und ein Kontaktieren des zu pflegenden Bodens 5 im mittleren, die Elastomer-Ringe 25 aufweisenden Bereich. Es erfolgt somit ein Abrollen über eine stoßabsorbierende Lauffläche. Bei Bewegung quer zur üblichen Verschieberichtung r kippen die Laufrollen 6 aus der senkrechten Stellung zur einen oder zur anderen Seite unter Einschluss eines negativen oder positiven Kippwinkels a, so dass die den Elastomer-Ringen 25 benachbarten Bereiche der Lauffläche 24 mit geringem Reibkoeffizienten in Kontakt zum Pflegeboden 5 treten. An der nun folgenden Gleitbewegung über den Pflegeboden 5 sind ausschließlich die seitlichen Hartkunststoff-Laufflächenbereiche beteiligt, demzufolge es zu keiner Streifenbildung bzw. Abrieb auf dem zu pflegenden Boden 5 kommt.

## Patentansprüche

1. Vorrichtung wie insbesondere ein verfahrbarer Staubsauger (1) oder eine verfahrbare Bodendüse (4) für einen Staubsauger (1), mit einer vorzugsweise aus Kunststoffmaterial bestehenden Laufrolle (6) mit einer geometrischen Drehachse (x), wobei die Laufrolle (6) weiter um eine Achse (y) quer zu der Drehachse (x) kippbar ist, **dadurch gekennzeichnet, dass** die Kippachse (y) bezogen auf eine Benutzungsstellung der Vorrichtung gegenüber der geometrischen Drehachse (x) nach unten versetzt ausgebildet ist.

2. Vorrichtung nach Anspruch 1, **dadurch gekennzeichnet, dass** die Kippachse (y) in einer physikalischen Achse (12) verwirklicht ist, die einerseits mit einem Nabenteil (9) und andererseits mit einem Chassis der Vorrichtung verbunden ist.

3. Vorrichtung nach einem der Ansprüche 1 oder 2, **dadurch gekennzeichnet, dass** die Laufrolle (6) eine Lauffläche (24) aufweist, dass auf der Lauffläche (24) jedenfalls in Querrichtung Bereiche mit unterschiedlichen Gleiteigenschaften ausgebildet sind und dass bei verkippter Laufrolle (6) ein Bereich anderer Gleiteigenschaft als bei unverkippter Laufrolle (6) auf dem Boden (5) aufliegt.

4. Vorrichtung nach Anspruch 3, **dadurch gekennzeichnet, dass** die Lauffläche (24) in einem über ihre Breite (b) gesehenen mittleren Bereich mit einem Gummimaterial oder thermoplastischen Elastomer versehen ist.

5. Vorrichtung nach einem der Ansprüche 3 oder 4, **dadurch gekennzeichnet, dass** die Lauffläche (24) in einem seitlichen Bereich aus einem Hartkunststoff besteht.

6. Vorrichtung nach einem der Ansprüche 1 bis 5, **dadurch gekennzeichnet, dass** zwei gegenüberliegend auf derselben geometrischen Achse (x) angeordnete Laufrollen (6) über eine Spurstange (19) miteinander verbunden sind.

7. Vorrichtung nach einem der Ansprüche 1 bis 6, **dadurch gekennzeichnet, dass** die Kippanlenkung so ausgebildet ist, dass sowohl ein negativer als auch ein positiver Kippwinkel (α) eingenommen werden kann.

8. Vorrichtung nach einem der Ansprüche 1 bis 7, **dadurch gekennzeichnet, dass** in einer Kipplage eine Feder (16,18,23) wirksam ist, zur Rückverlagerung der Laufrolle (6) in die unverkippte Lage.

9. Vorrichtung nach einem der Ansprüche 1 bis 8, **dadurch gekennzeichnet, dass** die Kippgelenkverbindung (11) aus einer Kippachse (12) besteht, die einerseits von einem chassisseitigen Flansch (14) und andererseits von einem laufrollenseitigen Flansch (15) ergriffen ist.

10. Vorrichtung nach Anspruch 9, **dadurch gekennzeichnet, dass** die Kippachse (12) mit einem der Flansche (14,15) fest verbunden ist.

11. Vorrichtung nach einem Ansprüche 1 bis 10, **dadurch gekennzeichnet, dass** die Kippachse (y) und die Drehachse (x) sich nicht schneiden.

12. Vorrichtung nach einem der Ansprüche 1 bis 11, **dadurch gekennzeichnet, dass** die Laufrolle (6) ein Nabenteil (9) und ein Laufrad (10) aufweist, dass das Nabenteil (9) relativ zu dem Laufrad (10) drehbar ist und dass die Laufrolle (6) mittels des Nabenteils (9) an der Vorrichtung befestigt ist.

13. Vorrichtung nach Anspruch 12, **dadurch gekennzeichnet, dass** die Befestigung der Laufrolle (6) unter Verzicht auf eine physikalische Drehachse außermittig an dem Nabenteil (9) angreift.

14. Vorrichtung nach einem der Ansprüche 1 bis 13, **dadurch gekennzeichnet, dass** die Kippachse (y) bezogen auf die geometrische Drehachse (x) der Laufrolle (6) außermittig angeordnet ist.

## Claims

1. Device, such as in particular a displaceable vacuum cleaner (1) or a displaceable floor nozzle (4) for a vacuum cleaner (1), comprising a roller (6) which preferably consists of plastics material and which has a geometric axis of rotation (x), it further being possible to tilt the roller (6) about an axis (y) transverse to the axis of rotation (x), **characterised in that** the tilt axis (y) is offset downwards from the geometric axis of rotation (x), based on an operating position of the device.

2. Device according to claim 1, **characterised in that** the tilt axis (y) is implemented as a physical axle (12) which is connected to a hub part (9) on the one hand and to a chassis of the device on the other hand.

3. Device according to either claim 1 or claim 2, **characterised in that** the roller (6) comprises a running surface (24), **in that** regions having different sliding properties are formed on the running surface (24), in each case in the transverse direction, and **in that** when the roller (6) is tilted, a region with different sliding properties from when the roller (6) is not tilted lies on the floor (5).

4. Device according to claim 3, **characterised in that** the running surface (24) is provided with a rubber material or thermoplastic elastomer in a region which is central over the width (b) thereof.

5. Device according to either claim 3 or claim 4, **characterised in that** the running surface (24) consists of a hard plastics material in a lateral region.

6. Device according to any one of claims 1 to 5, **characterised in that** two rollers (6) arranged opposite one another on the same geometric axis (x) are interconnected via a track rod (19).

7. Device according to any one of claims 1 to 6, **characterised in that** the tilt pivot point is constructed in such a way that both a negative and a positive tilt angle (α) can be obtained.

8. Device according to any one of claims 1 to 7, **characterised in that** in a tilted position, a spring (16, 18, 23) acts to displace the roller (6) back into the non-tilted position.

9. Device according to any one of claims 1 to 8, **characterised in that** the tilt articulation (11) consists of a tilt axle (12) which is engaged on the one hand by a flange (14) of the chassis and on the other hand by a flange (15) of the roller.

10. Device according to claim 9, **characterised in that** the tilt axis (12) is rigidly connected to one of the flanges (14, 15).

11. Device according to any one of claims 1 to 10, **characterised in that** the tilt axis (y) and the axis of rotation (x) do not intersect.

12. Device according to any one of claims 1 to 11, **characterised in that** the roller (6) comprises a hub part (9) and a running wheel (10), **in that** the hub part (9) is rotatable relative to the running wheel (10), and **in that** the roller (6) is fastened to the device via the hub part (9).

13. Device according to claim 12, **characterised in that** the fastening of the roller (6) engages eccentrically with the hub part (9) without a physical rotation axle.

14. Device according to any one of claims 1 to 13, **characterised in that** the tilt axis (y) is arranged eccentric to the geometric axis of rotation (x) of the roller (6).

## Revendications

1. Dispositif comme en particulier un aspirateur (1) déplaçable ou une brosse (4) déplaçable pour un aspirateur avec un rouleau de roulement (6) composé de préférence d'une matière en plastique dotée d'un axe de rotation (x) géométrique, le rouleau de roulement (6) pouvant par ailleurs basculer autour d'un axe (y) perpendiculaire à l'axe de rotation (x), **caractérisé en ce que** l'axe de basculement (y) est conçu en déport vers le bas vis-à-vis de l'axe de rotation géométrique (x) par rapport à une position d'utilisation du dispositif.

2. Dispositif selon la revendication 1 **caractérisé en ce que** l'axe de basculement (y) est réalisé dans un axe physique (12) qui est relié, d'une part, à une pièce de moyeu et, d'autre part, à un châssis du dispositif.

3. Dispositif selon l'une des revendications 1 ou 2, **caractérisé en ce que** le rouleau de roulement (6) présente une surface de roulement (24), que des zones avec des propriétés d'adhérence différentes sont conçues sur la surface de roulement (24), en tout cas en direction transversale, et que la zone appliquée sur le sol si le rouleau de roulement est (6) est basculé présente une adhérence différente que si le rouleau de roulement (6) n'est pas basculé.

4. Dispositif selon la revendication 3, **caractérisé en ce que** la surface de roulement (24) est dotée d'une zone centrale, vue dans le sens de sa largeur (b), possédant un matériau en caoutchouc ou un élastomère thermoplastique.

5. Dispositif selon l'une des revendications 3 ou 4, **caractérisé en ce que** la surface de roulement (24) se compose d'un plastique rigide dans une zone latérale.

6. Dispositif selon l'une des revendications 1 à 5, **caractérisé en ce que** deux galets de roulement (6) disposés face à face sur le même axe géométrique (x) sont reliés l'un à l'autre par l'intermédiaire d'une tige d'accouplement (19).

7. Dispositif selon l'une des revendications 1 à 6, **caractérisé en ce que** l'articulation basculante est conçue de telle sorte qu'un angle de basculement (α) tant négatif que positif peut être adopté.

8. Dispositif selon l'une des revendications 1 à 7, **caractérisé en ce qu'**un ressort (16, 18, 23) est actif dans une position de basculement pour le déplacement vers l'arrière du rouleau de roulement (6) dans la position non basculée.

9. Dispositif selon l'une des revendications 1 à 8, **caractérisé en ce que** l'articulation de basculement (11) se compose d'un axe de basculement (12) qui est saisi, d'une part, par une bride (14) côté châssis et, d'autre part, par une bride (15) coté rouleau de roulement.

10. Dispositif selon la revendication 9, **caractérisé en ce que** l'axe de basculement (12) est fixé à demeure avec l'une des brides (14, 15).

11. Dispositif selon l'une des revendications 1 à 10, **caractérisé en ce que** l'axe de basculement (y) et l'axe de rotation (x) ne se coupent pas.

12. Dispositif selon l'une des revendications 1 à 11, **caractérisé en ce que** le rouleau de roulement (6) présente une pièce de moyeu et une roue de roulement (10), que la pièce de moyeu (9) peut tourner par rapport à la roue de roulement (10) et que le rouleau de roulement (6) est fixé à l'aide de la pièce de moyeu (9) au dispositif.

13. Dispositif selon la revendication 12, **caractérisé en ce que** la fixation du rouleau de roulement (6) est appliquée sur la partie de moyeu (9) de manière excentrique en renonçant à un axe de rotation physique.

14. Dispositif selon l'une des revendications 1 à 13, **caractérisé en ce que** l'axe de basculement (y) est disposé de manière excentrique par rapport à l'axe de rotation (x) géométrique du rouleau de roulement (6).
